# EUROPEAN PATENT SPECIFICATION

(11) **EP 3 069 648 B1**
(45) Date of publication and mention of the grant of the patent: **24.01.2018**
(21) Application number: 16160502.7
(22) Date of filing: 15.03.2016
(51) Int. Cl.: A47L 15/44, A47L 15/42, D06F 39/02, F16K 31/40, A47L 15/00

(54) **HOUSEHOLD WASHING MACHINE, IN PARTICULAR A DISHWASHER, COMPRISING A WASHING AGENTS DISPENSING DEVICE, AND OPERATION METHOD THEREOF**
HAUSHALTSWASCHMASCHINE, INSBESONDERE GESCHIRRSPÜLER, MIT EINE WASCHMITTELABGABEVORRICHTUNG SOWIE VERFAHREN ZU SEINEM BETRIEB
MACHINE À LAVER DOMESTIQUE, EN PARTICULIER LAVE-VAISSELLE, POURVU D'UN DISTRIBUTEUR D'AGENTS DE LAVAGE AINSI QUE PROCÉDÉ POUR SON FONCTIONNEMENT

(30) Priority: 18.03.2015 IT UB20150609
(43) Date of publication of application: 21.09.2016
(73) Proprietor: TP Reflex Group S.p.A., 21040 Venegono Superiore (VA) (IT)
(72) Inventor: GHINATO, Renzo, 21050 Bisuschio (VA) (IT); ROTTA, Andrea, 22070 Appiano Gentile (CO) (IT)
(74) Representative: Reposio, Giancarlo

(56) References cited:
- EP-A1- 2 404 538
- EP-A2- 1 024 504
- EP-A2- 1 935 317
- DE-U1- 20 311 433
- DE-U1- 29 800 479
- FR-A1- 2 086 019
- FR-A1- 2 527 734
- US-A1- 2013 087 173

## Description

The present invention relates to a washing machine for household use, in particular a dishwasher, comprising a washing agent dispensing device.

The present invention also relates to a method of operation of a household washing machine, in particular a dishwasher, and to a related washing agent dispensing device.

Washing machines known in the art comprise a control system for handling and controlling the operation of the washing machine, said control system being adapted to implement at least one wash program.

For example, the washing machines, in particular the dishwashers, currently available on the market are usually fitted with at least some of the following wash programs:
- a basic wash program, to be used for washing crockery with a normal degree of dirtiness at a certain drying stage. Such a program typically comprises an initial cold prewash step, a hot wash step, two cold rinses, a hot rinse step, and a final drying step;
- an intensive wash program, to be used for very dirty crockery, or when food residues are particularly hard to remove (e.g. very dry or burned). Such a program typically comprises an initial hot prewash step, a hot wash step, a first cold rinse step, a second cold rinse step, a third hot rinse step, and a final drying step;
- an economy wash program, to be used for washing crockery which is not very dirty or for partial loads. Such a program typically comprises an initial cold prewash step, a hot wash step, a first cold rinse step, a second hot rinse step, and a final drying step.

Therefore, the washing machines known in the art comprise a tub inside of which crockery is cleaned during a wash step of the above-mentioned wash program by a wash liquid, in particular water added with a detergent agent.

The wash program also includes at least one rinse step, wherein the crockery is subjected to the action of a rinse liquid, in particular water added with a rinse aid agent.

Therefore, known washing machines are fitted with suitable dispensing devices, which comprise distinct compartments or reservoirs adapted to contain different washing agents specific for said steps of a wash program; said washing agents typically consist of a detergent (for example, in powder), which is dispensed during the wash step, and a liquid additive, such as rinse aid, which is dispensed during the rinse step, in particular during a hot rinse step. In those cases wherein the use of detergent is also recommended for the prewash step, the same detergent as used for the wash step is usually employed.

A known dispensing device generally consists of a body usually housed in the inner panel of the front loading door of the dishwashing machine; said body comprises at least one compartment for the dose of detergent required by the wash step, said compartment being provided with a lid which is opened at the appropriate instant of the wash program by the washing machine's control system.

In addition to said single-dose wash detergent compartment, the body of the dispensing device usually also includes a dispenser of a liquid additive, such as a rinse aid agent to be dispensed during the rinse step.

As regards the possible use of detergent also during the prewash step, some dispensing devices may be fitted with an additional compartment, distinct from the compartment containing the detergent intended for the wash step. In such cases, the lid that closes the wash detergent compartment usually extends to cover also said additional compartment.

However, the washing machines, in particular the household dishwashers, known in the art suffer from many drawbacks.

In particular, a considerable drawback of the solutions known in the art is that they require some room inside the wash tub to allow opening the lid of the dispensing device in order to release the washing agent, such room necessarily having to be obtained between the dispensing device and the crockery and/or the racks containing said crockery. It is clear that this drawback is even more important the smaller the dimensions of the wash tub and/or the greater the dimensions of the lid. In addition, such solutions known in the art suffer from the drawback that they do not allow for an accurate release of the dose of washing agent necessary for the execution of the various steps of a wash program, since the washing agent is released randomly into the tub when the lid of the dispensing device is opened; this inevitably results in the possibility for the washing agent to fall in a spot within the tub where it cannot be adequately dissolved in the wash liquid, this being detrimental to the performance of the washing machine.

At the state of the art it is also known the washing machine described in document No. EP2404538.

Said washing machine comprises a pump for the circulation of the wash liquid and a washing agent dispensing device, said dispensing device being equipped with a chamber for a washing agent and an inlet connected to said pump by means of a duct associated with a valve, which can be opened or closed in order to connect or disconnect, respectively, the inlet of the dispensing device to/from the pump. Moreover, the dispensing device shown in document No. EP2404538 comprises an outlet that allows permanent fluidic communication between the detergent chamber and the tub, thus allowing the washing agent to be released into said tub as the wash liquid coming from the pump enters the washing agent chamber.

However, also the dispensing device described in document No. EP2404538 has some drawbacks, in that its realization does not take into account the fact that different washing agents, possibly contained in different chambers of a dispensing device, may have to be introduced into the tub during the same wash cycle.

Another drawback of the solution described in document No. EP2404538 is that it does not ensure a reliable and constant release of different washing agents into the wash liquid; in addition, such a solution does not allow, depending on the specific requirements of a given wash program, directing a certain quantity of water coming from the pump towards different compartments or chambers of the dispensing devices known in the art, which are used for containing different washing agents. A dishwasher according to the preamble of claim 1 is known for example from DE20311433 U1. A further drawback of the solutions known at the state of the art is that they require that the quantity of washing agents, in particular of rinse aid agent, that must be dispensed during the rinse step be set beforehand (e.g. mechanically) by the user, without offering the latter the possibility of having said dispensing process handled electronically and dynamically by the washing machine itself according to the specific requirements of a given wash program.

In this frame, it is the main object of the present invention to provide a household washing machine, in particular a dishwasher, comprising a washing agents dispensing device, and a related dispensing device, which are so realized as to overcome the drawbacks of the prior art.

In particular, it is the main object of the present invention to provide a household washing machine, in particular a dishwasher, comprising a washing agents dispensing device that allows optimal exploitation of the room available inside the wash tub.

It is another object of the present invention to provide a household washing machine, in particular a dishwasher, comprising a washing agents dispensing device that allows an accurate and effective release of the dose of washing agent necessary for the execution of the various steps of a wash program and the achievement of optimal performance of the washing machine.

It is another object of the present invention to provide a washing machine and a related dispensing device which can ensure a reliable and constant release of different washing agents into the wash liquid, and which allow, according to the specific requirements of a given wash program, directing a certain quantity of fluid coming from the pump towards different compartments or chambers of the dispensing device.

It is a further object of the present invention to realize a washing machine and a related washing agent dispensing device that allow the user to have the machine itself handle the supply of the washing agents in an electronic and dynamic manner, in particular according to the specific requirements of a given wash program.

Said objects are achieved by the present invention through a household washing machine, in particular a dishwasher, comprising a washing agent dispensing device, as well as the related methods of operation and washing agent dispensing device, incorporating the features set out in the appended claims, which are an integral part of the present description.

Further objects, features and advantages of the present invention will become apparent from the following detailed description and from the annexed drawings, which are supplied by way of non-limiting explanatory example, wherein:
- Fig. 1 is a schematic view of a household washing machine, in particular a dishwasher, which incorporates the features of the present invention;
- Fig. 2 is a vertical sectional view (along line A-A of Fig. 1) of a dispensing device according to the present invention;
- Fig. 3 shows a schematic view of some components of the washing machine and a horizontal sectional view (along line B-B of Fig. 2) of the dispensing device according to the present invention in a first working condition;
- Fig. 4 is a schematic view of the components of Fig. 3 in a second working condition;
- Fig. 5 is a schematic view of the components of Figs. 3 and 4 in a third working condition;
- Fig. 6 is a schematic view of the components of Figs. 3, 4 and 5 in a fourth working condition.

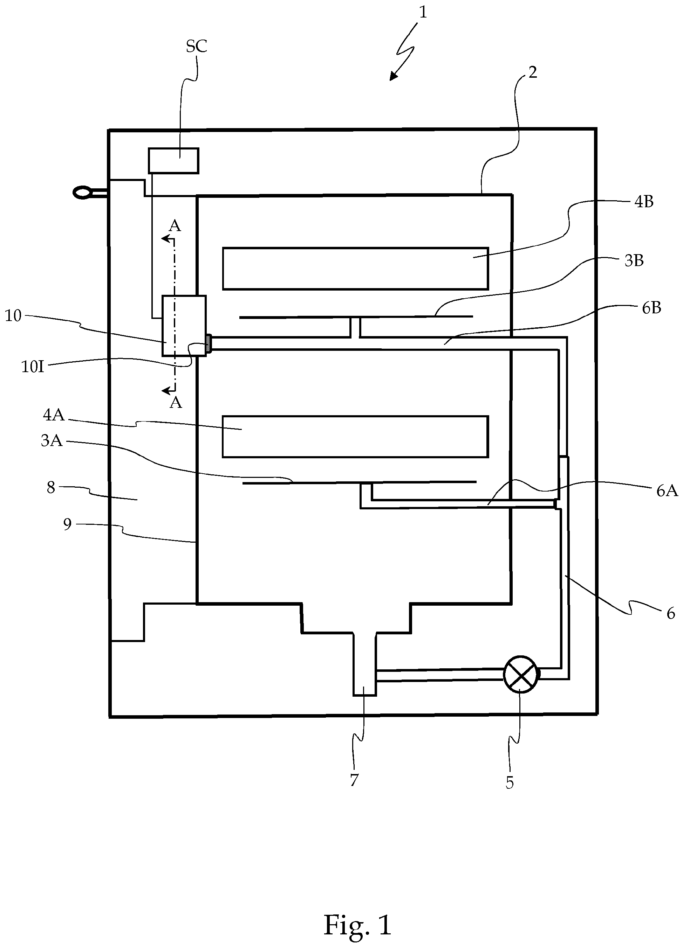

Referring now to the annexed drawings, in Fig. 1 reference numeral 1 designates as a whole a household washing machine, in particular a dishwasher, according to the present invention.

The washing machine 1 comprises a control system SC, in particular of the electric or electronic type, for handling and controlling the operation of the washing machine 1, said control system SC being adapted to implement at least one wash program.

The washing machine 1 further comprises a tub 2 inside of which crockery is cleaned by washing means comprising a wash fluid or liquid; in particular, said at least one wash program comprises a wash step, wherein the wash liquid consists of a fluid (typically water) added with a detergent agent, and a rinse step, wherein the wash liquid consists of a fluid added with a rinse aid agent. Whenever the use of a detergent agent is also recommended for a prewash step, the same detergent agent can be used as the one employed for the wash step.

The annexed drawings do not show the crockery, the wash liquid, the detergent agent and the rinse aid agent.

The wash liquid (a fluid, such as water, which can be added with a detergent agent and/or a rinse aid agent) is sprayed onto the crockery to be washed by means of at least one sprayer 3A, 3B associated with at least one rack 4A, 4B suitable for housing the crockery to be washed and rinsed. Since some steps of a wash program can also be carried out by using the fluid alone (typically water), in the present description the term "wash liquid" will be used in a generic manner, without specifying whether it refers to the fluid alone or to the wash liquid (consisting of fluid added with a washing agent, e.g. detergent or rinse aid).

In particular, Fig. 1 shows a first sprayer 3A associated with a lower rack 4A and a second sprayer 3B associated with an upper rack 4B. It is however clear that the washing machine 1 may comprise a different number of sprayers 3A, 3B, e.g. only one sprayer 3A, 3B or at least one additional sprayer (not shown in the drawings); furthermore, said washing machine 1 may also comprise a different number of racks 4A, 4B.

The washing machine 1 further comprises a pump 5 associated with a delivery duct 6 for distributing the wash liquid inside said washing machine 1; for example, according to the embodiment shown in Fig. 1, the pump 5 and the delivery duct 6 allow the wash liquid to flow from a sump 7 to said first sprayer 3A and second sprayer 3B.

The washing machine 1 also comprises a dispensing device 10 for dispensing washing agents for the steps envisaged by said at least one wash program.

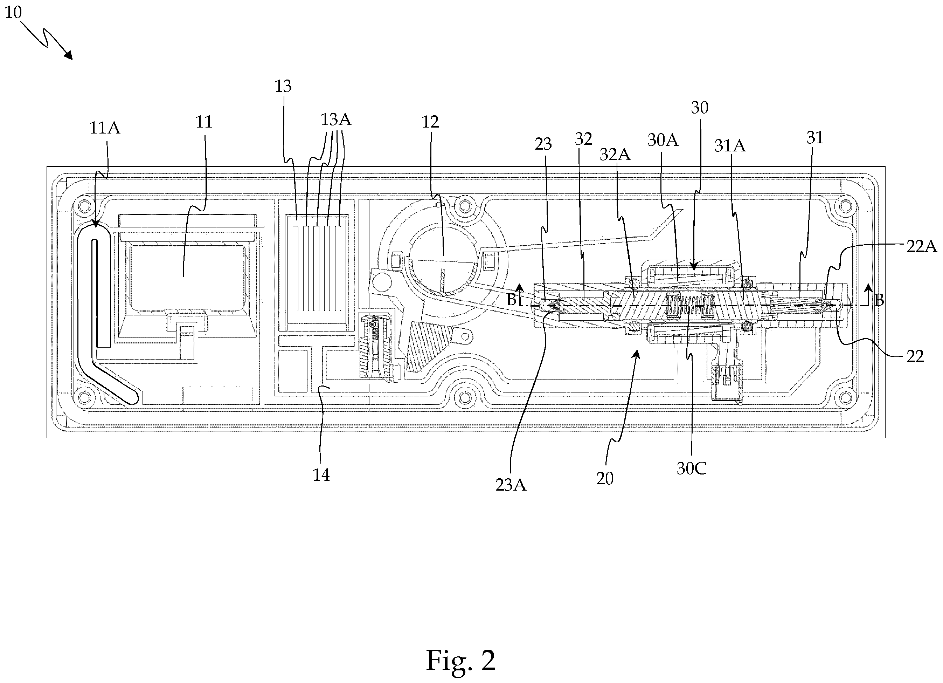

As can be seen in Figures 2 to 6, said dispensing device 10 comprises an inlet 10I connected to said pump 5, a first compartment 11 adapted to contain a detergent agent for the execution of a wash step, and a second compartment 12 adapted to contain a rinse aid agent for the execution of a rinse step.

In accordance with the present invention, said dispensing device 10 is associated with an electrovalve 20 comprising:
- at least one first duct 21 connected to said pump 5, in particular by means of said inlet 10I, for introducing wash liquid coming from the pump 5 into said electrovalve 20, at least one second duct 22 for introducing said wash liquid into the first compartment 11, and at least one passage portion 20P for connecting said at least one first duct 21 and said at least one second duct 22;
- at least one third duct 23 for introducing the rinse aid agent coming from the second compartment 12 into said passage portion 20P, and at least one fourth duct 24 for introducing said rinse aid agent into the tub 2, said third duct 23 and fourth duct 24 being connected by said at least one passage portion 20P.

Furthermore, said electrovalve 20 comprises intercepting means (designated as a whole by reference numeral 30 in Figures 2 to 6) associated with said at least one passage portion 20P and comprising an actuating element 30A associated with:
- a first shut-off element 31 for selectively obstructing or opening a first passage 22A in order to allow said wash liquid to flow from said passage portion 20P towards said at least one second duct 22;
- a second shut-off element 32 for selectively obstructing or opening a second passage 23A in order to allow the rinse aid agent to flow from said at least one third duct 23 towards said passage portion 20P.

In particular, said actuating element 30A comprises an electromagnet electrically connected to the washing machine 1, which controls at the right time (usually at the beginning and at the end of a given step of a wash program), in particular through the control system SC, the power supply to the actuating element 30A in order to magnetically attract a first core 31A of the first shut-off element 31 and a second core 32A of the second shut-off element 32; in particular, the first core 31A and the second core 32A are made of a material suitable for being attracted by the actuating element 30A when the electromagnet is energized.

The annexed drawings do not show the electric connections between the actuating element 30A and the washing machine 1.

The figures do show, however, that the first shut-off element 31 and the second shut-off element 32 are so realized as to comprise ends adapted to be coupled with the first passage 22A and the second passage 23A, respectively.

In accordance with the teachings of the present invention, said at least one passage portion 20P may be so realized as to comprise just one chamber; as an alternative, said at least one passage portion 20P may be so realized as to comprise two different chambers (not shown), in particular a first chamber allowing communication between the first duct 21 and the second duct 22, and a second chamber allowing communication between the third duct 23 and the fourth duct 24.

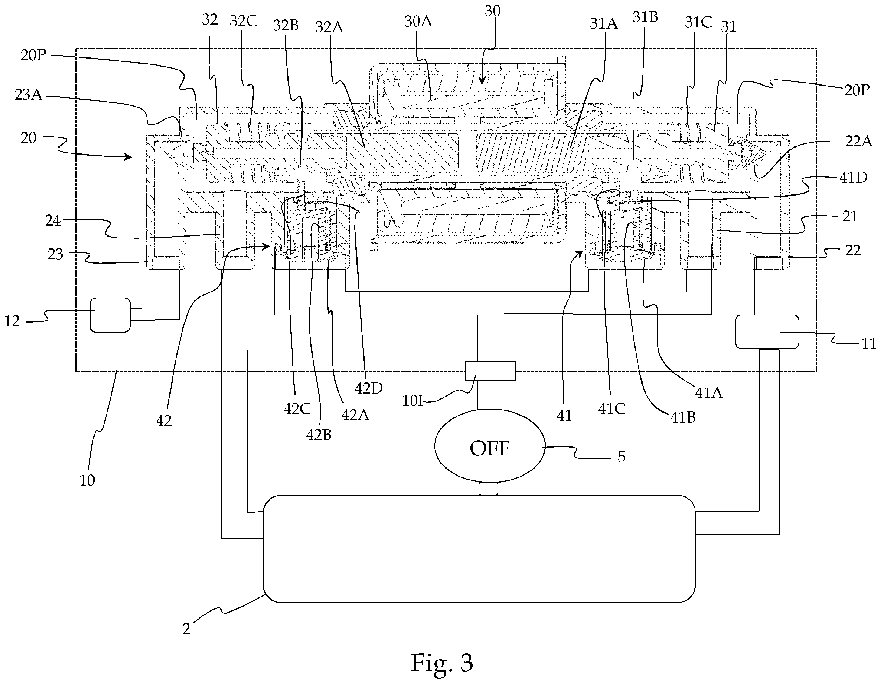

Moreover, in Figures 3 to 6 it can be seen that the first shut-off element 31 and the second shut-off element 32 are positioned within said electrovalve 20 (in particular within said at least one passage portion 20P) in such a way as to extend in substantially opposite directions and to have the first core 31A and the second core 32A substantially opposite to each other; it is however clear that said shut-off elements 31, 32 may be positioned in a different manner within said electrovalve 20, in particular within said passage portion 20P.

Preferably, the electrovalve 20 is positioned inside the dispensing device 10; it is however clear that the dispensing device 10 and the electrovalve 20 may be associated with each other in a different manner; for example, the electrovalve 20 may be coupled to an external portion of a wall of the dispensing device 10.

The special provisions of the dispensing device 10 and of the electrovalve 20 according to the present invention allow providing a washing machine 1 realized in such a way as to optimally exploit the room available inside the tub 2, since such components allow the washing agents to be optimally released into the wash fluid or liquid coming from the pump 5 without having to resort to lids that need to be opened in order to release the washing agents, as on the contrary happens in prior-art dispensing devices.

Furthermore, such provisions ensure an accurate and effective release of the dose of washing agent (whether detergent or rinse aid) necessary for the execution of the various steps of a wash program, as well as optimum performances of the washing machine, since the washing agent is allowed to be effectively dissolved by the flow of wash liquid coming from the pump 5 and then adequately delivered into the tub 2.

Another advantage of the dispensing device 10 and of the electrovalve 20 according to the present invention is that they allow directing a given quantity of fluid coming from the pump 5 towards different compartments or chambers 11, 12 of the dispensing device 10.

In addition, the provisions of the present invention allow providing a washing machine 1 wherein the supply of washing agents can be handled electronically and dynamically by the washing machine 1 itself, in particular according to the specific requirements of a given wash program.

According to the present invention, said electrovalve 20 comprises a first locking system (designated as a whole by reference numeral 41), in particular of the pneumatic type, associated with the first shut-off element 31 and hydraulically connected to said pump 5, in particular through said inlet 10I, so as to be activated upon activation of the pump 5 and deactivated upon deactivation of said pump 5.

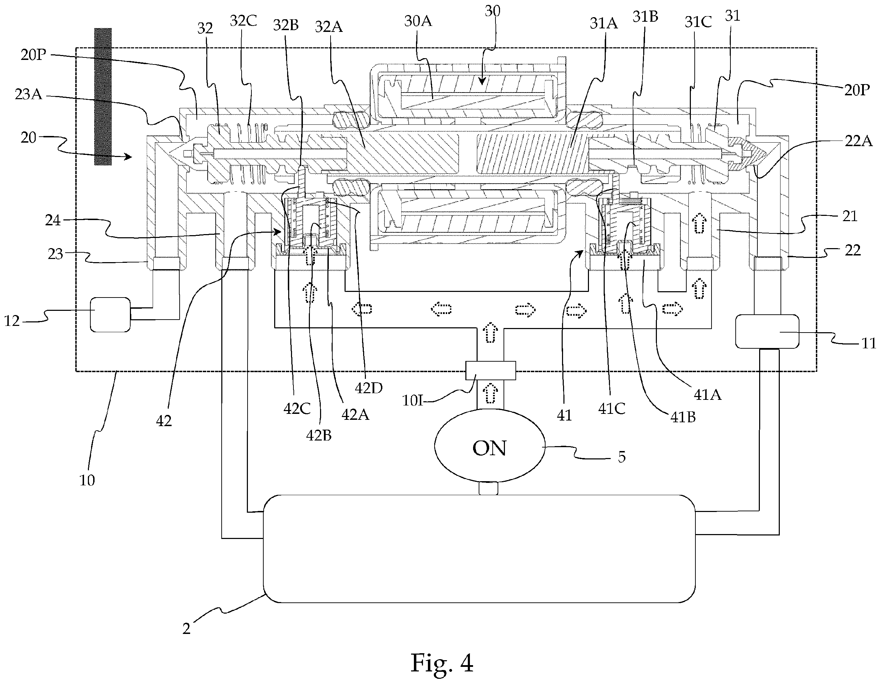

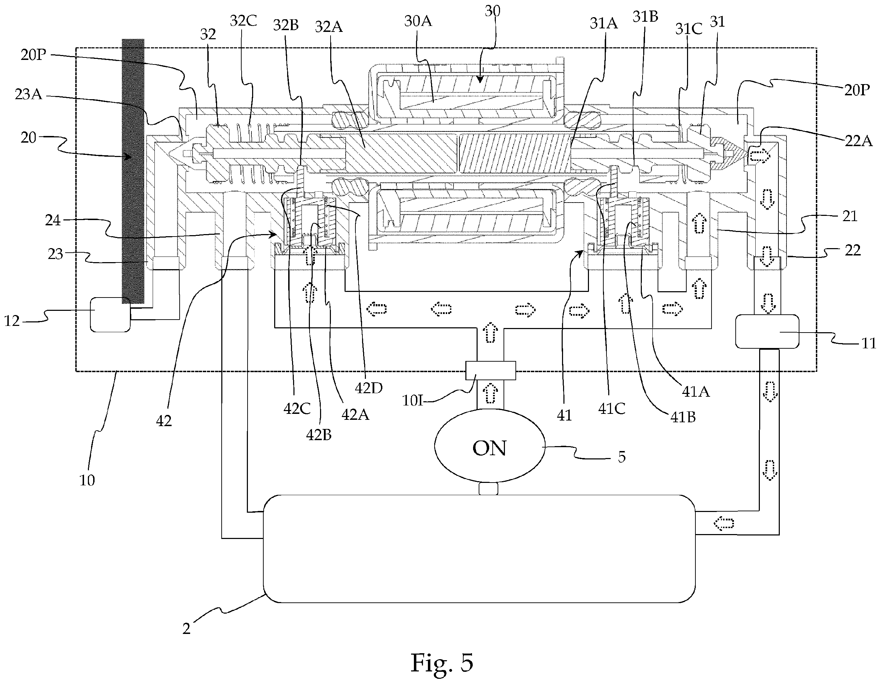

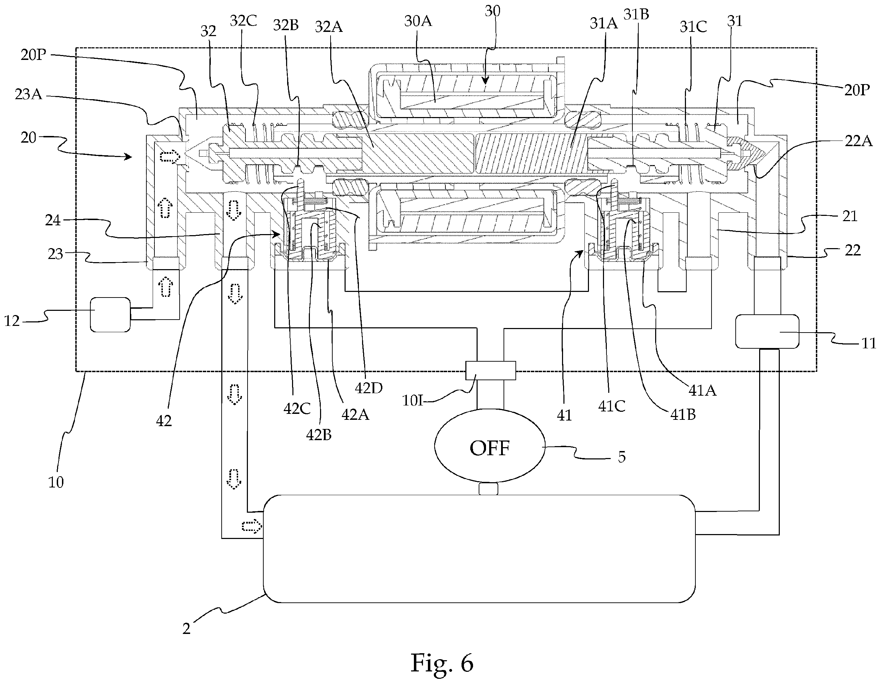

In particular, the first locking system 41 is so realized as to be able to switch:
- from a first condition (which can be defined as "idle" or "inactive" condition, see Fig. 3), which occurs when the pump 5 is inactive ("OFF") and no power is supplied to the actuating element 30A, wherein said first locking system 41 does not interfere with the first shut-off element 31;
- to a second condition (which can be defined as "abutment" or "partially active" condition, see Fig. 4), which occurs when the pump 5 is active ("ON") and no power is supplied to the actuating element 30A, wherein said first locking system 41 rests on the first shut-off element 31 without preventing it from moving;
- to a third condition (which can be defined as "locked" or "active" condition, see Fig. 5), which occurs when the pump 5 is active ("ON") and power is supplied to the actuating element 30A for moving the first shut-off element 31 in order to open the first passage 22A, thereby putting the passage portion 20P in communication with the second duct 22 and locking said first locking system 41 to the first shut-off element 31;
- to a fourth condition (which can also be defined as "idle" or "inactive" condition, see Fig. 6), which occurs when the pump 5 is inactive ("OFF") and partial power is supplied to the actuating element 30A, wherein said first locking system 41 does not interfere with the first shut-off element 31.

In a preferred embodiment (shown in the annexed drawings), the first locking system 41 comprises:
- a first elastic element 41A (e.g. a diaphragm made of elastic material or a similar component) sensitive to the pressure of the fluid coming from the pump 5;
- a first body 41B associated with said first elastic element 41A and provided with a first rod 41C adapted to interfere (in particular, in said third "locked" condition) with at least one first groove 31B of the first shut-off element 31;
- a first return element 41D (e.g. a spring or a similar component) associated with the first body 41B so as to exert a thrust on said first body 41B in a direction opposite to the direction of the pressure of the fluid coming from the pump 5, thus maintaining or returning the first locking system 41 into the first "idle" or "inactive" condition when the pump 5 is off.

Note that the different positions of the first body 41B are obtained by moving it in a suitable seat or in suitable guides (not shown) formed in the electrovalve 20.

It is apparent from the above description that the first locking system 41 is of the pneumatic type, since the different working conditions (previously described) of the first body 41B and of the first rod 41C are mainly affected and determined by the pressure exerted on the first elastic element or first diaphragm 41A by the fluid coming from the pump 5, i.e. by the operating conditions of said pump 5.

It is therefore clear that, in addition to ensuring a reliable and constant release of the washing agent in compliance with the specific requirements of a given wash program, the provision of the first locking system 41 according to the present invention also allows the first locking element 31 to be kept in a condition such that communication is allowed between the first duct 21, the passage portion 20P and the second duct 22 even without having to continuously supply power to the actuating element 30A. It follows that the provision of the first locking system 41 allows saving plenty of energy and reducing the wear of the electric components included in the washing machine 1 according to the present invention.

According to the present invention, said electrovalve 20 comprises a second locking system (designated as a whole by reference numeral 42), in particular of the pneumatic type, associated with the second shut-off element 32 and hydraulically connected to said pump 5, in particular through said inlet 10I, so as to be activated upon activation of the pump 5 and deactivated upon deactivation of said pump 5.

In particular, the second locking system 42 is so realized as to be able to switch:
- from a first position (which can be defined as "idle" or "inactive" position, see Fig. 3), which occurs when the pump 5 is inactive ("OFF") and no power is supplied to the actuating element 30A, wherein said second locking system 42 does not interfere with the second shut-off element 32;
- to a second position (which can be defined as "locked" or "active" position, see Figures 4 and 5), which occurs when the pump 5 is active ("ON") and said second locking system 42 locks the second shut-off element 32;
- to a third position (which can also be defined as "idle" or "inactive" position, see Fig. 6), which occurs when the pump 5 is inactive ("OFF"), said second locking system 42 does not interfere with the second shut-off element 32, and partial power is supplied to the actuating element 30A in order to open the second passage 23A and allow the rinse aid agent to flow from the third duct 23 into the passage portion 20P (and then into the fourth duct 24 for delivery into the tub 2).

In a preferred embodiment (shown in the annexed drawings), the second locking system 42 comprises:
- a second elastic element 42A (e.g. a diaphragm made of elastic material or a similar component) sensitive to the pressure of the fluid coming from the pump 5;
- a second body 42B associated with said second elastic element 42A and provided with a second rod 42C adapted to interfere (in particular, in said second "locked" position) with at least one second groove 32B of the second shut-off element 32;
- a second return element 42D (e.g. a spring or a similar component) associated with the second body 42B so as to exert a thrust on said second body 42B in a direction opposite to the direction of the pressure of the fluid coming from the pump 5, thus maintaining (or returning) the second locking system 42 in the first "idle" or "inactive" condition when the pump 5 is off.

Preferably, also as concerns the second locking system 42, the different positions of the second body 42B are obtained by its movement in a suitable seat or in suitable guides (not shown) formed on the body of the electrovalve 20.

It is apparent from the above description that also the second locking system 42 is of the pneumatic type, since the different positions (previously described) of the second body 42B and of the first rod 42C are mainly affected and determined by the pressure exerted on the second elastic element or second diaphragm 42A by the fluid coming from the pump 5; as a result, said different positions are mainly affected and determined by the operating condition of said pump 5.

It is therefore clear that the second locking system 42, in addition to ensuring a reliable and constant release of the rinse aid agent in compliance with the specific requirements of a given wash program, also allows keeping the second shut-off element 32 in a closed condition, such as to prevent communication between the third duct 23 and the fourth duct 22 when the pump 5 is on.

In the embodiment shown in the annexed drawings, the first locking system 41 and the second locking system 42 are realized in substantially the same manner; it is however clear that the first locking system 41 and the second locking system 42 according to the present invention may be realized differently from each other and also from those shown in the annexed drawings.

In Figures 3 to 6 it can also be noticed that the electrovalve 20 comprises a first countering element 31C associated with the first shut-off element 31 for holding it in the position in which it closes the first passage 22A when no power is supplied to the actuating element 30A (as shown in Figs. 3 and 6), i.e. a position that prevents the fluid from flowing from the passage portion 20P towards said at least one second duct 22 through the first passage 22A.

In addition, the electrovalve 20 comprises a second countering element 32C associated with the second shut-off element 32 for holding it in the position in which it closes the second passage 23A when no power is supplied to the actuating element 30A (as shown in Fig. 3), i.e. a position that prevents the rinse aid agent from flowing from said at least one third duct 23 towards the passage portion 20P through the second passage 23A.

In a preferred embodiment, the second countering element 32C is so realized or calibrated as to offer less resistance (in particular, less resistance to compression) than the first countering element 31C, so that only the second shut-off element 32 will be moved upon partial activation of the actuating element 30A (as shown in Fig. 6), thus allowing the rinse aid agent to flow from the third duct 23 into the passage portion 20P (and then into the fourth duct 24) through the second passage 23A.

In an alternative embodiment (shown by way of example in Fig. 2), the electrovalve 20 may be so realized as to comprise a single countering element 30C positioned between the first core 31A and the second core 32A; in this embodiment, the electrovalve 20 is so realized that the first core 31A is positioned differently than the second core 32A relative to the actuating element 30A, so that only the second shut-off element 32 will be moved upon partial activation of the actuating element 30A, which occurs when the pump 5 is off and the second locking system 42 does not interfere with the second shut-off element 32; as a consequence, upon said partial activation of the actuating element 30A, only the second shut-off element 32 will move to allow the rinse aid agent to flow from said at least one third duct 23 to the passage portion 20P through the second passage 23A.

Fig. 2 also shows that the dispensing device 10 comprises a siphon 11A at the outlet of the first compartment 11, which allows the wash liquid exiting the first compartment 11 to suck the wash liquid that may still be present in the first compartment 11.

The provision of the siphon 11A and the position thereof at the outlet of the first compartment 11 turns out to be particularly advantageous, in that it allows said first compartment 11 to be completely drained, thus avoiding that the user might find some residual wash liquid inside the first compartment 11 when (usually at the end of a wash program or before starting a new wash program) he/she opens the dispensing device 10 in order to refill the first compartment 11 with a detergent agent. In fact, the presence of residual wash liquid inside the first compartment 11 might be troublesome for the user, because such residual wash liquid might flow out of the washing machine while refilling the first compartment 11.

In Fig. 2 it can also be seen that the dispensing device 10 comprises an additional compartment 13 for containing a washing agent (or detergent) for a prewash step. Preferably, said additional compartment 13 is hydraulically connected to the pump 5 without being intercepted by the first shut-off element 31 and/or by the second shut-off element 32; in the embodiment wherein the electrovalve 20 is positioned in the dispensing device 10, the additional compartment 13 is directly connected to the inlet 10I of said dispensing device 10, in particular by means of a suitable duct 14 of the dispensing device 10. Therefore, said duct 14 is so realized as to not interfere with the intercepting means 30, i.e. it is realized in such a way that a portion of the wash liquid can directly flow from the inlet 10I of the dispensing device 10 to said additional compartment 13.

Furthermore, said additional compartment 13 communicates directly with the tub 2 through at least one aperture 13A; note that Fig. 2 shows a plurality of apertures 13A in the form of slots adapted to communicate with the tub 2.

Preferably, the dispensing device 10 according to the present invention is housed in the loading door 8 of the dishwashing machine 1, in particular in an inner panel 9 of said door 8.

In such an embodiment, the inlet 10I comprises a filtering element (also not shown in the drawings) to prevent any impurities in the wash liquid, coming from the pump 5, from entering the dispensing device 10 and clogging the electrovalve 20 and/or other inner portions of said dispensing device 10; it is also clear that the positioning of the dispensing device 10 in the door 8 will ensure easier access to said filtering element, in particular for cleaning purposes.

Also, the inlet 10I of the dispensing device 10 is preferably hydraulically connected to at least one pipe 6A, 6B for feeding at least one sprayer 3A, 3B of the washing machine 1, in particular when the door 8 is in a condition in which it closes the tub 2.

Preferably, said inlet 10I and/or said at least one pipe 6A, 6B comprise coupling means (e.g. a bellows-shaped element, not shown in the drawings), which facilitate the connection between such components when the front-loading door 8 of the dishwashing machine 1 is closed.

In a preferred embodiment (schematically shown in Fig. 1), the inlet 10I of the dispensing device 10 is hydraulically connected to an upper pipe 6B for feeding a second sprayer 3B associated with an upper rack 4B, in particular said upper pipe 6B essentially consisting of a branch of a delivery duct 6 for distributing the wash liquid within said washing machine 1; it is however clear that said inlet 10I of the dispensing device 10 may also be hydraulically connected to a lower pipe 6A for feeding a first sprayer 3A associated with a lower rack 4A, or to an additional upper pipe for feeding an additional sprayer (not shown in the drawings) of the washing machine 1.

The fact that the inlet 10I of the dispensing device 10 is hydraulically connected to at least one pipe 6A, 6B for feeding at least one sprayer 3A, 3B promotes the entry of wash liquid into the dispensing device 10 for transporting the washing agents contained therein into the tub 2; moreover, such provision avoids the need for a special additional pipe, which would raise the costs incurred for manufacturing the washing machine 1 while also inevitably making the architecture, construction and assembly of the said washing machine 1 more complex.

The method of operation of the household washing machine 1, in particular a dishwasher, according to the present invention is apparent in the light of the above description, said washing machine 1 comprising:
- a control system SC of the electric or electronic type for handling and controlling the operation of the washing machine 1, said control system SC being adapted to implement at least one wash program;
- a tub 2 inside of which crockery is cleaned by washing means comprising a wash liquid;
- a pump 5 associated with a delivery duct 6 for distributing the wash liquid inside said washing machine 1;
- a dispensing device 10 for dispensing washing agents for the steps envisaged by said at least one wash program, said dispensing device 10 comprising an inlet 10I connected to said pump 5, a first compartment 11 adapted to contain a detergent agent for the execution of a wash step, and a second compartment 12 adapted to contain a rinse aid agent for the execution of a rinse step;
- an electrovalve 20 associated with said dispensing device 10.

In accordance with the present invention, said method of operation comprises the steps of:
a) activating the pump 5 to allow the wash liquid to flow into a first duct 21 and into at least one passage portion 20P of said electrovalve 20, and to switch a first pneumatic locking system 41 of the electrovalve 20 from a first condition ("idle" or "inactive" condition, see Fig. 3), in which said first locking system 41 does not interfere with a first shut-off element 31 of the electrovalve 20, to a second condition ("abutment" or "partially active" condition, see Fig. 4), in which said first locking system 41 rests on the first shut-off element 31 without preventing it from moving, said activation of the pump 5 allowing a second pneumatic locking system 42 of the electrovalve 20 to switch from a first position ("idle" or "inactive" position, see Fig. 3), in which said second locking system 42 does not interfere with a second shut-off element 32 of the electrovalve 20, to a second position ("locked" or "active" position, see Figs, 4 and 5), in which said second locking system 42 locks the second shut-off element 32;
b) supplying power to an actuating element 30A of the electrovalve 20 to move the first shut-off element 31 in order to switch it from said second condition to a third condition ("locked" or "active" condition, see Fig. 5), in which said first locking system 41 locks the first shut-off element 31 and a first passage 22A is opened to obtain communication between the passage portion 20P and a second duct 22, thereby allowing said wash fluid or liquid to be fed into the first compartment 11.

In particular, said step a) is carried out by the pressure exerted by the fluid coming from the pump 5 on a first elastic element 41A of the first locking system 41 and on a second elastic element 42A of the second locking system 42.

In a preferred embodiment, step a) may comprise or be preceded by a step a1) of causing at least a part of the wash liquid to flow into an additional compartment 13 suitable for containing a detergent agent for the execution of a prewash step, in particular said flow occurring through a duct 14 so realized as to not interfere with the intercepting means 30; as a result, said portion of wash liquid can directly flow into said additional compartment 13 through the duct 14, which is connected to the pump 5, e.g. via the inlet 10I of the dispensing device 10 (in the embodiment wherein the electrovalve 20 is positioned in the dispensing device 10).

Moreover, during said step b) the actuating element 30A is electrically powered. It should also be noted that during said step b), following the locking of said first locking system 41 together with the first shut-off element 31, communication between the passage portion 20P and the second duct 22 can still occur even with a deactivated actuating element 30A, since it is sufficient that the pump 5 is active.

Preferably, the method of operation of the washing machine 1 according to the present invention further comprises the following steps:
c) deactivating the pump 5 in order to return the first locking system 41 into said first ("idle") condition and the second locking system 42 into said first ("inactive") position;
d) supplying power to the actuating element 30A only partially in order to hold the first shut-off element 31 in a condition in which it closes the first passage 22A and to switch the second shut-off element 32 into a position in which it opens the second passage 23A, so as to allow a rinse aid agent coming from a third duct 23 associated with the second compartment 12 to flow towards a fourth duct 24 (i.e. a position in which a rinse aid agent is allowed to flow and then enter the tub 2).

In a preferred embodiment, said step d) is carried out through repeated and/or prolonged activation of the actuating element 30A (in particular, said prolonged activation being obtained by repeatedly and/or constantly supplying power to the actuating element 30A), so as to obtain successive releases or one prolonged release of the rinse aid agent contained in the second compartment 12 into the passage portion 20P and into the fourth duct 24; this will ensure an accurate, dosed and properly metered release of the rinse aid agent contained in the second compartment, suited to the type of wash program.

According to the present invention, said step d) can be carried out by coupling a first countering element 31C to the first shut-off element 31 and a second countering element 32C to the second shut-off element 32, said second countering element 32C being so realized or calibrated as to offer less resistance to compression than the first countering element 31C.

As an alternative, said step d) can be carried out by coupling a single countering element 30C positioned between a first core 31A of the first shut-off element 31 and a second core 32A of the second shut-off element 32, and by realizing the electrovalve 20 in such a way that the first core 31A is positioned differently than the second core 32A relative to the actuating element 30A, so that only the second shut-off element 32 will be moved upon partial activation (as shown in Fig. 6) of said actuating element 30A.

The features of the present invention, as well as the advantages thereof, are apparent from the above description.

In particular, the peculiar provisions of the dispensing device 10 and of the electrovalve 20 according to the present invention allow providing a washing machine 1 realized in such a way as to optimally exploit the room available inside the tub 2, since such components allow the washing agents to be optimally released into the wash fluid or liquid coming from the pump 5 without having to resort to lids that need to be opened in order to release the washing agents, as on the contrary happens in prior-art dispensing devices.

Furthermore, such provisions ensure an accurate and effective release of the dose of washing agent (whether detergent or rinse aid) necessary for the execution of the various steps of a wash program, as well as optimum performance of the washing machine 1, since the washing agent is allowed to be effectively dissolved by the flow of wash fluid or liquid coming from the pump 5 and then adequately delivered into the tub 2.

Another advantage of the dispensing device 10 and of the electrovalve 20 according to the present invention is that they allow directing a given quantity of wash fluid or liquid coming from the pump 5 towards different compartments or chambers 12, 13 of the dispensing device 10, allowing the user to have the machine 1 itself handle the supply of the washing agents in an electronic and dynamic manner, in particular according to the specific requirements of a given wash program.

It should also be noted that the provision of the first locking system 41 according to the present invention, in addition to cooperating with the other components in order to ensure a reliable and constant release of washing agent, in compliance with specific requirements of a given wash program, also allows keeping the first shut-off element 31 in a condition in which it allows communication between the first duct 21, the passage portion 20P and the second duct 22, even without having to continuously supply power to the actuating element 30A. It follows that this provision allows saving plenty of energy and reducing the wear of the electric components included in the washing machine 1.

The provision of the second locking system 42 further allows keeping the second shut-off element 32 in a closed condition, such that communication will not be allowed between the third duct 23 and the fourth duct 22 when the pump 5 is on.

A further advantage of the present invention is that the provision of the siphon 11A and its position at the outlet of the first compartment 11 is particularly beneficial in that it avoids that the user might find any residual wash liquid inside the first compartment 11 when (usually at the end of a wash program or before starting a new wash program) he/she opens the dispensing device 10 in order to refill it with a detergent agent and/or a rinse aid agent.

The peculiar arrangement of the dispensing device 10 in the loading door 8 of the dishwashing machine 1 and its hydraulic connection to at least one pipe 6A, 6B for feeding at least one sprayer 3A, 3B facilitate the entry of the wash liquid into the dispensing device 10 for transporting the washing agents contained therein into the tub; moreover, since they simplify the architecture, construction and assembly of said washing machine 1, such provisions make for considerably lower production costs.

The washing machine, the method of operation and the dispensing device described herein by way of example may be subject to many possible variations without departing from the novelty spirit of the inventive idea; it is also clear that in the practical implementation of the invention the illustrated details may have different shapes or be replaced with other technically equivalent elements.

It can therefore be easily understood that the present invention is not limited to the above-described washing machine, method of operation and dispensing device, but may be subject to many modifications, improvements or replacements of equivalent parts and elements without departing from the inventive idea, as clearly specified in the following claims.

## Claims

1. Household washing machine (1), in particular a dishwasher, comprising:
- a control system (SC), in particular of the electric or electronic type, for handling and controlling the operation of the washing machine (1), said control system (SC) being adapted to implement at least one wash program;
- a tub (2) inside of which crockery is cleaned by washing means comprising a wash fluid or liquid;
- a pump (5) associated with a delivery duct (6) for distributing the wash liquid inside said washing machine (1);
- a dispensing device (10) for dispensing washing agents for the steps envisaged by said at least one wash program, and comprising an inlet (101) connected to said pump (5), a first compartment (11) adapted to contain a detergent agent for the execution of a wash step, and a second compartment (12) adapted to contain a rinse aid agent for the execution of a rinse step, and an electrovalve (20) associated with said dispensing device (10),
**characterized in that** said electrovalve (20) comprises:
- at least one first duct (21) connected to said pump (5), in particular by means of said inlet (101), for introducing wash liquid coming from the pump (5) into said electrovalve (20),
- at least one second duct (22) for introducing said wash liquid into the first compartment (11),
- at least one passage portion (20P) for connecting said at least one first duct (21) and said at least one second duct (22);
- at least one third duct (23) for introducing the rinse aid agent coming from the second compartment (12) into said passage portion (20P),
- at least one fourth duct (24) for introducing said rinse aid agent into the tub (2), said third duct (23) and fourth duct (24) being connected by said at least one passage portion (20P), and
- intercepting means (30) associated with said at least one passage portion (20P) and comprising an actuating element (30A) associated with:
- a first shut-off element (31) for selectively obstructing or opening a first passage (22A) in order to allow said wash liquid to flow from said passage portion (20P) towards said at least one second duct (22);
- a second shut-off element (32) for selectively obstructing or opening a second passage (23A) in order to allow the rinse aid agent to flow from said at least one third duct (23) towards said passage portion (20P).

2. Washing machine (1) according to claim 1, **characterized in that** said actuating element (30A) comprises an electromagnet electrically connected to the washing machine (1), which controls, in particular through the control system (SC), the power supply to the actuating element (30A) in order to magnetically attract a first core (31A) of the first shut-off element (31) and a second core (32A) of the second shut-off element (32).

3. Washing machine (1) according to claim 2, **characterized in that** the first shut-off element (31) and the second shut-off element (32) are positioned within said electrovalve (20) in such a way as to extend in substantially opposite directions and to have the first core (31A) and the second core (32A) substantially opposite to each other.

4. Washing machine (1) according to one or more of the preceding claims, **characterized in that** said electrovalve (20) is positioned inside the dispensing device (10).

5. Washing machine (1) according to one or more of the preceding claims, **characterized in that** said electrovalve (20) comprises a first locking system (41), in particular of the pneumatic type, associated with the first shut-off element (31) and hydraulically connected to said pump (5), in particular through said inlet (101), so as to be activated upon activation of the pump (5) and deactivated upon deactivation of said pump (5).

6. Washing machine (1) according to claim 5, **characterized in that** said first locking system (41) comprises:
- a first elastic element (41A) sensitive to the pressure of the fluid coming from the pump (5);
- a first body (41B) associated with said first elastic element (41A) and provided with a first rod (41C) adapted to interfere with at least one first groove (31B) of the first shut-off element (31);
- a first return element (41D) associated with the first body (41B) so as to exert a thrust upon said first body (41B) in a direction opposite to the direction of the pressure of the fluid coming from the pump (5).

7. Washing machine (1) according to one or more of the preceding claims, **characterized in that** said electrovalve (20) comprises a second locking system (42), in particular of the pneumatic type, associated with the second shut-off element (32) and hydraulically connected to said pump (5), in particular through said inlet (101), so as to be activated upon activation of the pump (5) and deactivated upon deactivation of said pump (5).

8. Washing machine (1) according to claim 7, **characterized in that** said second locking system (42) comprises:
- a second elastic element (42A) sensitive to the pressure of the fluid coming from the pump (5);
- a second body (42B) associated with said second elastic element (42A) and provided with a second rod (42C) adapted to interfere with at least one second groove (32B) of the second shut-off element (32);
- a second return element (42D) associated with the second body (42B) so as to exert a thrust upon said second body (42B) in a direction opposite to the direction of the pressure of the fluid coming from the pump (5).

9. Washing machine (1) according to one or more of the preceding claims, **characterized in that** said electrovalve (20) comprises a first countering element (31C) associated with the first shut-off element (31) for holding it in the position in which it closes the first passage (22A) when no power is supplied to the actuating element (30A).

10. Washing machine (1) according to claim 9, **characterized in that** the electrovalve (20) comprises a second countering element (32C) associated with the second shut-off element (32) for holding it in the position in which it closes the second passage (23A) when no power is supplied to the actuating element (30A), in particular said second countering element (32C) being so realized or calibrated as to offer less resistance than the first countering element (31C), so that only the second shut-off element (32) will be moved upon partial activation of the actuating element (30A).

11. Washing machine (1) according to one or more of claims 1 to 8, **characterized in that** said electrovalve (20) comprises a single countering element (30C) positioned between the first core (31A) and the second core (32A), in particular said electrovalve (20) being so realized that the first core (31A) is positioned differently than the second core (32A) relative to the actuating element (30A), so that only the second shut-off element (32) will be moved upon partial activation of the actuating element (30A).

12. Washing machine (1) according to one or more of the preceding claims, **characterized in that** the dispensing device (10) comprises a siphon (11A) at the outlet of the first compartment (11).

13. Washing machine (1) according to one or more of the preceding claims, **characterized in that** said dispensing device (10) is housed in the loading door (8) of the dishwashing machine (1) and is hydraulically connected to at least one pipe (6A, 6B) for feeding at least one sprayer (3A, 3B) of the washing machine (1), in particular when the door (8) is in a condition in which it closes the tub (2).

14. Method of operation of the household washing machine (1) according to any one of claims 1 to 13, said method being **characterized in that** it comprises the following steps:
a) activating the pump (5) to allow the wash liquid to flow into a first duct (21) and into at least one passage portion (20P) of said electrovalve (20), and to switch a first pneumatic locking system (41) of the electrovalve (20) from a first condition, in which said first locking system (41) does not interfere with a first shut-off element (31) of the electrovalve (20), to a second condition, in which said first locking system (41) rests on the first shut-off element (31) without preventing it from moving, said activation of the pump (5) allowing a second pneumatic locking system (42) of the electrovalve (20) to switch from a first position, in which said second locking system (42) does not interfere with a second shut-off element (32) of the electrovalve (20), to a second position, in which said second locking system (42) locks the second shut-off element (32);
b) supplying power to an actuating element (30A) of the electrovalve (20) to move the first shut-off element (31) in order to switch it from said second condition to a third condition, in which said first locking system (41) locks the first shut-off element (31) and a first passage (22A) is opened to obtain communication between the passage portion (20P) and a second duct (22), thereby allowing said fluid to be fed into the first compartment (11).

15. Method according to claim 14, **characterized in that** it comprises the following steps:
c) deactivating the pump (5) in order to return the first locking system (41) into said first condition and the second locking system (42) into said first position;
d) supplying power to the actuating element (30A) only partially in order to hold the first shut-off element (31) in a condition in which it closes the first passage (22A) and to switch the second shut-off element (32) into a position in which it opens the second passage (23A), so as to allow a rinse aid agent coming from a third duct (23) associated with the second compartment (12) to flow towards the passage portion (20P) and towards a fourth duct (24).

## Patentansprüche

1. Haushaltswaschmaschine (1), insbesondere Geschirrspülmaschine, umfassend:
- ein Steuerungssystem (SC), insbesondere des elektrischen oder elektronischen Typs, zum Handhaben und Steuern des Betriebs der Waschmaschine (1), wobei das Steuerungssystem (SC) eingerichtet ist, um mindestens ein Waschprogramm auszuführen;
- eine Wanne (2), in der Geschirr durch Waschmittel, die ein Spülmittel oder Flüssigkeit umfassen, gereinigt wird;
- eine Pumpe (5), die einem Förderkanal (6) zugeordnet ist, um die Spülflüssigkeit in der Waschmaschine (1) zu verteilen;
- eine Abgabevorrichtung (10) zum Abgeben von Spülmitteln für die Schritte, die durch das mindestens eine Waschprogramm vorgesehen sind, mit einem Einlass (10I), der mit der Pumpe (5) verbunden ist, einer ersten Kammer (11), die eingerichtet ist, um ein Spülmittel für die Ausführung eines Waschschritts zu enthalten, und einer zweiten Kammer (12), die eingerichtet ist, ein Spülhilfsmittel für die Ausführung eines Spülschritts zu erhalten, und einem Elektroventil (20), das mit der Abgabevorrichtung (10) verbunden ist,
**dadurch gekennzeichnet, dass**
das Elektroventil (20) umfasst
- mindestens einen ersten Kanal (21), der mit der Pumpe (5) verbunden ist, insbesondere mittels des Einlasses (10I), um Spülflüssigkeit, die von der Pumpe (5) kommt, in das Elektroventil (20) einzuführen,
- mindestens einen zweiten Kanal (22) zum Einleiten der Spülflüssigkeit in die erste Kammer (11),
- mindestens einen Durchgangsabschnitt (20P) zum Verbinden des mindestens einen ersten Kanals (21) und des mindestens einen zweiten Kanals (22);
- mindestens einen dritten Kanal (23) zum Einführen des Spülhilfsmittels, das aus der zweiten Kammer (12) kommt, in den Durchgangsabschnitt (20P),
- mindestens einen vierten Kanal (24) zum Einführen des Spülhilfsmittels in die Wanne (2), wobei der dritte Kanal (23) und der vierte Kanal (24) durch den mindestens einen Durchgangsabschnitt (20P) verbunden sind, und
- Auffangmittel (30), die dem mindestens einen Durchgangsabschnitt (20P) zugeordnet sind und ein Betätigungselement (30A) umfassen, das dem mindestens einen Durchgangsabschnitt (20P) zugeordnet ist:
- ein erstes Absperrelement (31), um einen ersten Durchgang (22A) selektiv zu versperren oder zu öffnen, damit die Spülflüssigkeit von dem Durchgangsabschnitt (20P) zu dem mindestens einen zweiten Kanal (22) strömen kann;
- ein zweites Absperrelement (32), um einen zweiten Durchgang (23A) selektiv zu versperren oder zu öffnen, damit das Spülhilfsmittel aus dem mindestens einen dritten Kanal (23) zu dem Durchgangsabschnitt (20P) strömen kann.

2. Waschmaschine (1) nach Anspruch 1, **dadurch gekennzeichnet, dass** das Betätigungselement (30A) einen Elektromagneten aufweist, der elektrisch mit der Waschmaschine (1) verbunden ist, die, vorzugsweise durch das Steuerungssystem (SC), die Energieversorgung zum Betätigungselement (30A) steuert, um einen ersten Kern (31A) des ersten Absperrelements (31) und einen zweiten Kern (32A) des zweiten Absperrelements 32 anzuziehen.

3. Waschmaschine (1) nach Anspruch 2, **dadurch gekennzeichnet, dass** das erste Absperrelement (31) und das zweite Absperrelement (32) innerhalb des Elektroventils (20) derart positioniert sind, dass sie sich in im Wesentlichen entgegengesetzten Richtungen erstrecken und einen ersten Kern (31A) und einen zweiten Kern (32A) gegenüberliegend zueinander haben.

4. Waschmaschine (1) nach einem oder mehreren der vorhergehenden Ansprüche, **dadurch gekennzeichnet, dass** das Elektroventil (20) innerhalb der Abgabevorrichtung (10) positioniert ist.

5. Waschmaschine (1) nach einem oder mehreren der vorhergehenden Ansprüche, **dadurch gekennzeichnet, dass** das Elektroventil (20) ein erstes Verriegelungssystem (41), insbesondere vom pneumatischen Typ, umfasst, das dem ersten Absperrelement (31) zugeordnet ist und mit der Pumpe (5) hydraulisch verbunden ist, insbesondere durch den Einlass (10I), sodass es bei Aktivierung der Pumpe (5) aktiviert und bei Deaktivierung der Pumpe (5) deaktiviert wird.

6. Waschmaschine (1) nach Anspruch 5, **dadurch gekennzeichnet, dass** das erste Verriegelungssystem (41) umfasst:
- ein erstes elastisches Element (41A), das für den Druck des Fluids, das von der Pumpe (5) kommt, empfindlich ist;
- einen ersten Körper (41B), der dem ersten elastischen Element (41A) zugeordnet ist und mit einer ersten Stange (41C) versehen ist, die eingerichtet ist, um in mindestens eine erste Nut (31B) des ersten Absperrelements (31) einzugreifen;
- ein erstes Rückführelement (41D), das dem ersten Körper (41B) zugeordnet ist, um einen Schub auf den ersten Körper (41B) in einer Richtung auszuüben, die der Richtung entgegengesetzt ist, in der der Druck des Fluids, das von der Pumpe (5) kommt, wirkt.

7. Waschmaschine (1) nach einem oder mehreren der vorstehenden Ansprüche, **dadurch gekennzeichnet, dass** das Elektroventil (20) ein zweites Verriegelungssystem (42), insbesondere vom pneumatischen Typ, umfasst, das dem zweiten Absperrelement (32) zugeordnet ist und mit der Pumpe (5) hydraulisch verbunden ist, insbesondere durch den Einlass (10I), sodass es bei der Aktivierung der Pumpe (5) aktiviert und bei Deaktivierung der Pumpe (5) deaktiviert wird.

8. Waschmaschine (1) nach Anspruch 7, **dadurch gekennzeichnet, dass** das zweite Verriegelungssystem (42) umfasst:
- ein zweites elastisches Element (42A), das für den Druck des Fluids, das von der Pumpe (5) kommt, empfindlich ist;
- einen zweiten Körper (42B), der dem zweiten elastischen Element (42A) zugeordnet ist und mit einer zweiten Stange (42C) versehen ist, die eingerichtet ist, um in mindestens eine zweite Nut (32B) des zweiten Absperrelements (32) einzugreifen;
- ein zweites Rückführelement (42D), das dem zweiten Körper (42B) zugeordnet ist, um einen Schub auf den zweiten Körper (42B) in einer Richtung auszuüben, die der Richtung entgegengesetzt ist, in der der Druck des Fluids, das von der Pumpe (5) kommt, wirkt.

9. Waschmaschine (1) nach einem oder mehreren der vorhergehenden Ansprüche, **dadurch gekennzeichnet, dass** das Elektroventil (20) ein erstes Gegenelement (31C) aufweist, das dem ersten Absperrelement (31) zugeordnet ist, um es in der Position zu halten, in der es den ersten Durchgang (22A) schließt, wenn dem Betätigungselement (30A) keine Energie zugeführt wird.

10. Waschmaschine (1) nach Anspruch 9, **dadurch gekennzeichnet, dass** das Elektroventil (20) ein zweites Gegenelement (32C) aufweist, das dem zweiten Absperrelement (32) zugeordnet ist, um es in der Position zu halten, in der es den zweiten Durchgang (23A) schließt, wenn dem Betätigungselement (30A) keine Energie zugeführt wird, wobei vorzugsweise das zweite Gegenelement (32C) derart ausgeführt oder kalibriert ist, dass es einen geringeren Widerstand als das erste Gegenelement (31C) bietet, sodass bei teilweiser Aktivierung des Betätigungselements (30A) nur das zweite Absperrelement (32) bewegt wird.

11. Waschmaschine (1) nach einem oder mehreren der Ansprüche 1 bis 8, **dadurch gekennzeichnet, dass** das Elektroventil (20) ein einzelnes Gegenelement (30C) umfasst, das zwischen dem ersten Kern (31A) und dem zweiten Kern (32A) positioniert ist, wobei insbesondere das Elektroventil (20) so ausgeführt ist, dass der erste Kern (31A) anders als der zweite Kern (32A) relativ zum Betätigungselement (30A) positioniert ist, sodass bei teilweiser Aktivierung des Betätigungselements (30A) nur das zweite Absperrelement (32) bewegt wird.

12. Waschmaschine (1) nach einem oder mehreren der vorhergehenden Ansprüche, **dadurch gekennzeichnet, dass** die Abgabevorrichtung (10) einen Siphon (11A) am Ausgang der ersten Kammer (11) umfasst.

13. Waschmaschine (1) nach einem oder mehreren der vorhergehenden Ansprüche, **dadurch gekennzeichnet, dass** die Abgabevorrichtung (10) in der Ladetür (8) der Geschirrspülmaschine (1) untergebracht ist und hydraulisch mit mindestens einem Rohr (6A, 6B) verbunden ist, um mindestens eine Spülvorrichtung (3A, 3B) der Waschmaschine (1) zu versorgen, insbesondere wenn sich die Tür (8) in einem Zustand befindet, in dem sie die Wanne (2) schließt.

14. Verfahren zum Betreiben der Haushaltswaschmaschine (1) nach einem der Ansprüche 1 bis 13, wobei das Verfahren **dadurch gekennzeichnet ist, dass** es die folgenden Schritte umfasst:
a) Aktivieren der Pumpe (5), um der Spülflüssigkeit zu erlauben, in einen ersten Kanal (21) und in mindestens einen Durchgangsabschnitt (20P) des Elektroventils (20) zu fließen, und um ein erstes pneumatisches Verriegelungssystem (41) des Elektroventils (20) von einem ersten Zustand, in dem das Verriegelungssystem (41) nicht auf ein erstes Absperrelement (31) des Elektroventils (20) einwirkt, in einen zweiten Zustand zu schalten, bei dem das erste Verriegelungssystem (41) auf dem ersten Absperrelement (31) ruht, ohne es an seiner Bewegung zu hindern, wobei die Aktivierung der Pumpe (5) es einem zweiten pneumatischen Verriegelungssystem (42) des Elektroventils (20) erlaubt, von einer ersten Position, in der das zweite Verriegelungssystem (42) nicht auf ein zweites Absperrelement (32) des Elektroventils (20) einwirkt, in eine zweite Position zu schalten, in der das zweite Verriegelungssystem (42) das zweite Absperrelement (32) sperrt;
b) Versorgen eines Betätigungselements (30A) des Elektroventils (20) mit Energie, um das erste Absperrelement (31) zu bewegen, um es von dem zweiten Zustand in einen dritten Zustand zu schalten, in dem das erste Verriegelungssystem (41) das erste Absperrelement (31) sperrt und ein erster Durchgang (22A) geöffnet wird, um eine Verbindung zwischen dem Durchgangsabchnitt (20P) und dem zweiten Kanal (22) zu erhalten, um dadurch dem Fluid zu ermöglichen, in die erste Kammer (11) eingespeist zu werden.

15. Verfahren nach Anspruch 14, **dadurch gekennzeichnet, dass** es die folgenden Schritte umfasst:
c) Deaktivieren der Pumpe (5), um das erste Verriegelungssystem (41) in den ersten Zustand und das zweite Verriegelungssystem (42) in die erste Position zurückzuführen;
d) Versorgen des Betätigungselements (30A) nur teilweise mit Energie, um das erste Absperrelement (31) in einem Zustand zu halten, in dem es den ersten Durchgang (22A) schließt, und um das zweite Absperrelement (32) in eine Position zu schalten, in der es den zweiten Durchgang (23A) öffnet, sodass es einem Spülhilfsmittel erlaubt wird, aus einem dritten Kanal (23), der der zweiten Kammer (12) zugeordnet ist, zu kommen, um in Richtung auf den Durchgangsabschnitt (20P) und in Richtung zu einem vierten Kanal (24) zu fließen.

## Revendications

1. Machine à laver pour usage ménager (1), en particulier lave-vaisselle, comprenant :
- un système de commande (SC), en particulier du type électrique ou électronique, pour gérer et commander le fonctionnement de la machine à laver (1), ledit système de commande (SC) étant adapté pour implémenter au moins un programme de lavage ;
- une cuve (2) à l'intérieur de laquelle la vaisselle est nettoyée par un moyen de lavage comprenant un fluide ou liquide de lavage ;
- une pompe (5) associée à une conduite d'amenée (6) pour répartir le liquide de lavage à l'intérieur de ladite machine à laver (1) ;
- un dispositif de distribution (10) pour distribuer des agents de lavage pour les étapes envisagées par ledit au moins un programme de lavage, et comprenant un orifice d'entrée (10I) raccordé à ladite pompe (5), un premier compartiment (11) adapté pour contenir un agent détergent pour l'exécution d'une étape de lavage, et un second compartiment (12) adapté pour contenir un agent d'aide au rinçage pour l'exécution d'une étape de rinçage,
et une électrovanne (20) associée audit dispositif de distribution (10),
**caractérisée en ce que**
ladite électrovanne (20) comprend :
- au moins une première conduite (21) raccordée à ladite pompe (5), en particulier au moyen dudit orifice d'entrée (10I), pour introduire du liquide de lavage provenant de la pompe (5) dans ladite électrovanne (20),
- au moins une deuxième conduite (22) pour introduire ledit liquide de lavage dans le premier compartiment (11),
- au moins une portion de passage (20P) pour raccorder ladite au moins une première conduite (21) et ladite au moins une deuxième conduite (22) ;
- au moins une troisième conduite (23) pour introduire l'agent d'aide au rinçage provenant du second compartiment (12) dans ladite portion de passage (20P),
- au moins une quatrième conduite (24) pour introduire ledit agent d'aide au rinçage dans la cuve (2), lesdites troisième conduite (23) et quatrième conduite (24) étant raccordées par ladite au moins une portion de passage (20P), et
- un moyen d'interception (30) associé à ladite au moins une portion de passage (20P) et comprenant un élément d'actionnement (30A) associé à :
- un premier élément d'arrêt (31) pour obstruer ou ouvrir sélectivement un premier passage (22A) afin de permettre audit liquide de lavage de s'écouler depuis ladite portion de passage (20P) vers ladite au moins une deuxième conduite (22) ;
- un second élément d'arrêt (32) pour obstruer ou ouvrir sélectivement un second passage (23A) afin de permettre à l'agent d'aide au rinçage de s'écouler depuis ladite au moins une troisième conduite (23) vers ladite portion de passage (20P).

2. Machine à laver (1) selon la revendication 1, **caractérisée en ce que** ledit élément d'actionnement (30A) comprend un électroaimant raccordé électriquement à la machine à laver (1), qui commande, en particulier par l'intermédiaire du système de commande (SC), l'alimentation électrique à l'élément d'actionnement (30A) afin d'attirer magnétiquement un premier noyau (31A) du premier élément d'arrêt (31) et un second noyau (32A) du second élément d'arrêt (32).

3. Machine à laver (1) selon la revendication 2, **caractérisée en ce que** le premier élément d'arrêt (31) et le second élément d'arrêt (32) sont positionnés au sein de ladite électrovanne (20) de manière à s'étendre dans des directions sensiblement opposées et à avoir le premier noyau (31A) et le second noyau (32A) sensiblement opposés l'un à l'autre.

4. Machine à laver (1) selon une ou plusieurs des revendications précédentes, **caractérisée en ce que** ladite électrovanne (20) est positionnée à l'intérieur du dispositif de distribution (10).

5. Machine à laver (1) selon une ou plusieurs des revendications précédentes, **caractérisée en ce que** ladite électrovanne (20) comprend un premier système de verrouillage (41), en particulier du type pneumatique, associé au premier élément d'arrêt (31) et raccordé hydrauliquement à ladite pompe (5), en particulier par l'intermédiaire dudit orifice d'entrée (10I), de façon à être activé lors de l'activation de la pompe (5) et désactivé lors de la désactivation de ladite pompe (5).

6. Machine à laver (1) selon la revendication 5, **caractérisée en ce que** ledit premier système de verrouillage (41) comprend :
- un premier élément élastique (41A) sensible à la pression du fluide provenant de la pompe (5) ;
- un premier corps (41B) associé audit premier élément élastique (41A) et pourvu d'une première tige (41C) adaptée pour interférer avec au moins une première gorge (31B) du premier élément d'arrêt (31) ;
- un premier élément de renvoi (41D) associé au premier corps (41B) de façon à exercer une poussée sur ledit premier corps (41B) dans une direction opposée à la direction de la pression du fluide provenant de la pompe (5).

7. Machine à laver (1) selon une ou plusieurs des revendications précédentes, **caractérisée en ce que** ladite électrovanne (20) comprend un second système de verrouillage (42), en particulier du type pneumatique, associé au second élément d'arrêt (32) et raccordé hydrauliquement à ladite pompe (5), en particulier par l'intermédiaire dudit orifice d'entrée (10I), de façon à être activé lors de l'activation de la pompe (5) et désactivé lors de la désactivation de ladite pompe (5).

8. Machine à laver (1) selon la revendication 7, **caractérisée en ce que** ledit second système de verrouillage (42) comprend :
- un second élément élastique (42A) sensible à la pression du fluide provenant de la pompe (5) ;
- un second corps (42B) associé audit second élément élastique (42A) et pourvu d'une seconde tige (42C) adaptée pour interférer avec au moins une seconde gorge (32B) du second élément d'arrêt (32) ;
- un second élément de renvoi (42D) associé au second corps (42B) de façon à exercer une poussée sur ledit second corps (42B) dans une direction opposée à la direction de la pression du fluide provenant de la pompe (5).

9. Machine à laver (1) selon une ou plusieurs des revendications précédentes, **caractérisée en ce que** ladite électrovanne (20) comprend un premier élément d'opposition (31C) associé au premier élément d'arrêt (31) pour le maintenir dans la position dans laquelle il ferme le premier passage (22A) lorsqu'aucune alimentation n'est fournie à l'élément d'actionnement (30A).

10. Machine à laver (1) selon la revendication 9, **caractérisée en ce que** l'électrovanne (20) comprend un second élément d'opposition (32C) associé au second élément d'arrêt (32) pour le maintenir dans la position dans laquelle il ferme le second passage (23A) lorsqu'aucune alimentation n'est fournie à l'élément d'actionnement (30A), en particulier ledit second élément d'opposition (32C) étant réalisé ou étalonné de façon à offrir moins de résistance que le premier élément d'opposition (31C), de sorte que seul le second élément d'arrêt (32) soit déplacé lors d'une activation partielle de l'élément d'actionnement (30A).

11. Machine à laver (1) selon une ou plusieurs des revendications 1 à 8, **caractérisée en ce que** ladite électrovanne (20) comprend un seul élément d'opposition (30C) positionné entre le premier noyau (31A) et le second noyau (32A), en particulier ladite électrovanne (20) étant réalisée de sorte que le premier noyau (31A) soit positionné différemment du second noyau (32A) par rapport à l'élément d'actionnement (30A), de sorte que seul le second élément d'arrêt (32) soit déplacé lors d'une activation partielle de l'élément d'actionnement (30A).

12. Machine à laver (1) selon une ou plusieurs des revendications précédentes, **caractérisée en ce que** le dispositif de distribution (10) comprend un siphon (11A) au niveau de l'orifice de sortie du premier compartiment (11).

13. Machine à laver (1) selon une ou plusieurs des revendications précédentes, **caractérisée en ce que** ledit dispositif de distribution (10) est logé dans la porte de chargement (8) de la machine à laver de vaisselle (1) et est raccordé hydrauliquement à au moins un tuyau (6A, 6B) pour alimenter au moins un pulvérisateur (3A, 3B) de la machine à laver (1), en particulier lorsque la porte (8) est dans un état dans lequel elle ferme la cuve (2).

14. Procédé de fonctionnement de la machine à laver pour usage ménager (1) selon l'une quelconque des revendications 1 à 13, ledit procédé étant **caractérisé en ce qu'**il comprend les étapes suivantes :
a) l'activation de la pompe (5) pour permettre au liquide de lavage de s'écouler dans une première conduite (21) et dans au moins une portion de passage (20P) de ladite électrovanne (20), et pour commuter un premier système de verrouillage pneumatique (41) de l'électrovanne (20) d'un premier état, dans lequel ledit premier système de verrouillage (41) n'interfère pas avec un premier élément d'arrêt (31) de l'électrovanne (20), à un deuxième état, dans lequel ledit premier système de verrouillage (41) repose sur le premier élément d'arrêt (31) sans l'empêcher de se déplacer, ladite activation de la pompe (5) permettant à un second système de verrouillage pneumatique (42) de l'électrovanne (20) de commuter d'une première position, dans laquelle ledit second système de verrouillage (42) n'interfère pas avec un second élément d'arrêt (32) de l'électrovanne (20), à une seconde position, dans laquelle ledit second système de verrouillage (42) verrouille le second élément d'arrêt (32) ;
b) la fourniture d'alimentation à un élément d'actionnement (30A) de l'électrovanne (20) pour déplacer le premier élément d'arrêt (31) afin de le commuter dudit deuxième état à un troisième état, dans lequel ledit premier système de verrouillage (41) verrouille le premier élément d'arrêt (31) et un premier passage (22A) est ouvert pour obtenir une communication entre la portion de passage (20P) et une deuxième conduite (22), permettant ainsi l'alimentation dudit fluide dans le premier compartiment (11).

15. Procédé selon la revendication 14, **caractérisé en ce qu'**il comprend les étapes suivantes :
c) la désactivation de la pompe (5) afin de renvoyer le premier système de verrouillage (41) dans ledit premier état et le second système de verrouillage (42) dans ladite première position ;
d) la fourniture uniquement partielle d'alimentation à l'élément d'actionnement (30A) afin de maintenir le premier élément d'arrêt (31) dans un état dans lequel il ferme le premier passage (22A) et de commuter le second élément d'arrêt (32) dans une position dans laquelle il ouvre le second passage (23A), de façon à permettre à un agent d'aide au rinçage provenant d'une troisième conduite (23) associée au second compartiment (12) de s'écouler vers la portion de passage (20P) et vers une quatrième conduite (24).
